# EUROPÄISCHE PATENTSCHRIFT

(11) **EP 0 489 093 B1**
(45) Veröffentlichungstag und Bekanntmachung des Hinweises auf die Patenterteilung: **20.04.1994**
(21) Anmeldenummer: 90913170.8
(22) Anmeldetag: 14.08.1990
(51) Int. Cl.: G08C 25/02, H04Q 9/00, H04N 5/00

(54) **FERNBEDIENUNGSSYSTEM**
REMOTE CONTROL SYSTEM
SYSTEME DE TELECOMMANDE

(30) Priorität: 23.08.1989 DE 3927838
(43) Veröffentlichungstag der Anmeldung: 10.06.1992
(73) Patentinhaber: Deutsche Thomson-Brandt GmbH, 78010 Villingen-Schwenningen (DE)
(72) Erfinder: FECHNER, Rainer, D-7730 Villingen (DE); EIGELDINGER, Norbert, D-7730 Villingen-Schwenningen (DE)
(74) Vertreter: Einsel, Robert, Dipl.-Ing.
(86) Internationale Anmeldenummer: EP9001333
(87) Internationale Veröffentlichungsnummer: WO9103038

(56) Entgegenhaltungen:
- EP-A- 0 120 345
- EP-A- 0 320 439
- GB-A- 2 060 953
- GB-A- 2 194 370
- US-A- 4 517 564
- US-A- 4 825 209
- Funkschau, Band 56, Nr. 13, Juni 1984 (München) R. Auer: "IR-Fernsteuerung: Im Dialog", see page 51-52

## Beschreibung

Die Erfindung betrifft ein Fernbedienungssystem für elektrische und elektronische Geräte, insbesondere für Geräte der Unterhaltungselektronik, nach dem Oberbegriff des Anspruchs 1.

Es ist bekannt, elektrische Geräte wie z.B. Hörrundfunkempfänger, Fernsehempfänger und Videorecorder mit einer drahtlos sendenden Fernbedieneinheit zu steuern. Die Fernbedieneinheit enthält dazu z.B. einen gerichtet strahlenden Infrarot- oder Ultraschallsender, der entsprechend den einzelnen Funktionen codierte Signale an einen im Gerät befindlichen Infrarot- oder Ultraschallempfänger sendet. Auf diese Weise können verschiedene Funktionen des Gerätes, wie Ein- und Ausschaltung, Kanalwahl, Lautstärke, Helligkeit und Bandlauffunktionen eines Videorecorders ferngesteuert werden.

Aus der Zeitschrift Funkschau Nr. 13, Juni 1984, Seiten 51-52, ist ein System der eingangs genannten Art bekannt, wobei allerdings die nachfolgend zitierten, im Oberbegriff des Anspruchs 1 enthaltenen Merkmale nicht explizit offenbart sind, denen zufolge nach Erhalt eines von der Fernbedieneinheit ausgesendeten Befehles im Gerät Daten generiert werden, die entsprechend dem durch den Befehl bewirkten Status des Gerätes Informationen über im Gerät vorhandene aktuelle Betriebszustände und/oder Einstellzustände enthalten. Maßnahmen, die es ermöglichen, daß das Gerät auch bei einer mit Pausen versehenen Datenübertragung vom Gerät zum Bedienteil bedienbar bleibt, sind aus dieser Druckschrift nicht bekannt.

Diese sind auch der EP-A-0 320 439, aus der ein bidirektionales Fernbediensystem bekannt ist, das vor allem für Kraftfahrzeuge vorgesehen ist und daher besonderes den dort auftretenden Problemen der Fahrzeugsicherheit Rechnung zu tragen versucht, nicht entnehmbar.

Fernbedieneinheiten erfordern von dem Bedienenden eine gewisse Geschicklichkeit und Eingewöhnung. Der Bediendende kann nicht ohne weiteres erkennen, ob der in der Fernbedieneinheit eingegebene Befehl das Gerät überhaupt erreicht, insbesondere, wenn eine den Befehlsempfang quittierende Anzeige am Gerät aus der Entfernung vom Benutzer schlecht erkennbar ist. Der Benutzer ist daher praktisch gezwungen, nach jeder Betätigung eines Fernbedienungselementes zu prüfen, ob die gewünschte Reaktion am zu steuernden Gerät wirklich erfolgt.

Aus der EP-B-0 129 794 ist ein bidirektionales System mit einer Fernbedieneinheit und mehreren, durch diese zu steuernden Geräte bekannt, bei dem auch in den Geräten ein Sender und in der Fernbedieneinheit ein Empfänger vorgesehen ist. Bei diesem System wird zur Sicherstellung der Fernbedienfunktion an der Fernbedieneinheit, im folgenden FB-Einheit genannt, angezeigt, welches der Geräte empfangsbereit ist. Weitere Daten werden nicht übertragen.

Der Erfindung liegt die Aufgabe zugrunde, den Datenaustausch in einem System der eingangs genannten Art zwischen den entsprechenden Sendern und Empfängern zeitlich zu organisieren.

Diese Aufgabe wird gemäß der Erfindung durch die im Anspruch 1 aufgeführten Merkmale gelöst. Vorteilhafte Weiterbildungen der Erfindung sind in den Unteransprüchen gekennzeichnet.

Im Prinzip werden Anzeigen, die z.B. bei handelsüblichen Videorecordern auf der Frontseite des Gerätes über verschiedene Betriebs- und Einstellzustände Auskunft geben, vom Gerät an die FB-Einheit übertragen, und können dort an einem Anzeigefeld sichtbar gemacht werden. Somit könnte im Extremfall eine Anzeige am Gerät selbst entfallen, zumal das Gerät in vielen Fällen vom Bedienenden mehrere Meter entfernt aufgestellt ist, so daß die Anzeigen am Gerät nicht oder nur schlecht erkennbar sind. Die Übertragung der Daten vom Gerät an die FB-Einheit wird durch einen im Gerät angeordneten Sender durchgeführt, dem in der FB-Einheit ein Empfangsteil zugeordnet ist. Die aktuellen Betriebs- und Einstelldaten werden im Gerät durch eine Steuerlogik zyklisch abgefragt und ebenfalls zyklisch mit zwischengeschalteten Pausen übertragen. Um Fehlsteuerungen und Fehlanzeigen zu vermeiden, ist der eigene Empfänger sowohl im Gerät als auch in der FB-Einheit während einer Datenübertragung des eigenen Senders gesperrt. Dem Sender in der FB-Einheit ist eine Vorrangstellung eingeräumt, die dadurch gegeben ist, daß das Gerät die Daten mit zwischengeschalteten Pausen überträgt, so daß jeweils bei einer Pause das Empfangsteil im Gerät aktiviert ist.

Da bei Befehlsübertragungen von der FB-Einheit an das Gerät der Empfänger in der FB-Einheit gesperrt ist, ist in der FB-Einheit ein Speicher für bereits empfangene Daten vorhanden, so daß auch in dieser Phase Anzeigen im Anzeigefeld der FB-Einheit erfolgen können. Neben diesen Anzeigen kann z.B. außerdem die jeweilige Befehlsausgabe angezeigt werden. Um eine Übereinstimmung mit einer im Gerät angeordneten Uhr und der Zeitanzeige an der Fernbedienung sicherzustellen, kann die Uhrzeit direkt angezeigt, oder eine in der FB-Einheit vorhandene Uhr durch die Geräteuhr synchronisiert werden.

Am Beispiel eines Videorecorders sollen denkbare Anzeigemöglichkeiten an der FB-Einheit angesprochen werden:
- A: Betriebszustände:
Ein, Aus, Rec, Play, Stop, Kanal usw.

- B: Laufwerksdaten:
Bandzählerstand, Restlaufzeit des Bandes usw.

- C: Statusdaten:
Uhrzeit, Datum, Timer und Speicherinhalte usw.

- D: Sonderbetriebsdaten:
VPS, REC, Quickstart, Ziellauf usw.

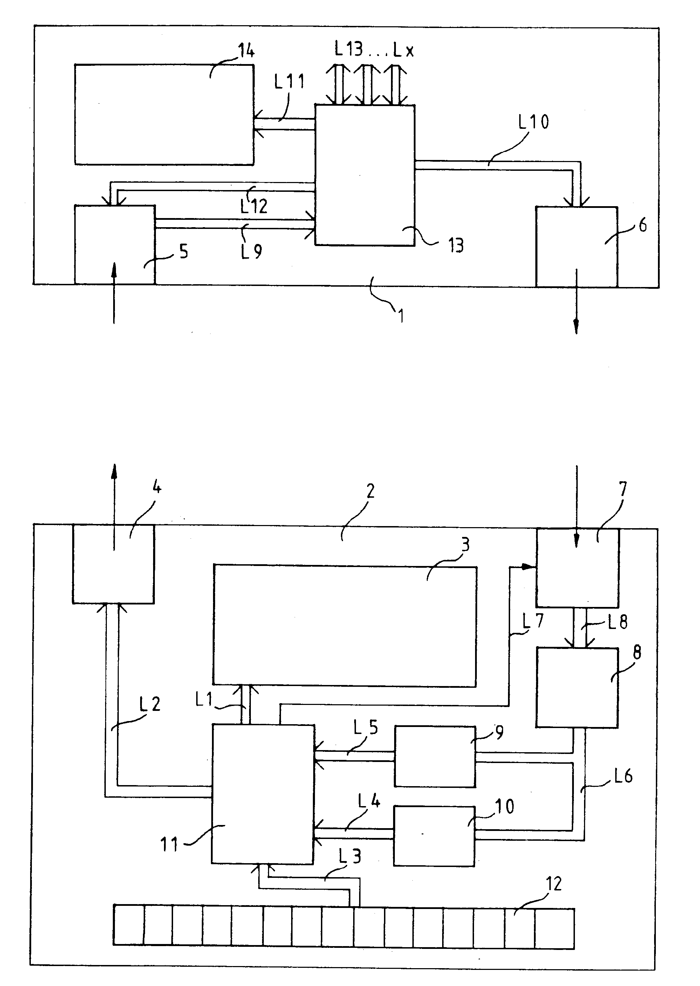

Im folgenden soll die Erfindung anhand einer Figur beispielhaft näher erläutert werden:
Die Figur zeigt ein fernbedienbares Gerät 1 und ein zugehörige FB-Einheit 2. Das Gerät 1 ist mit einem Sendeteil 6 und einem Empfangsteil 5 ausgerüstet. Ebenso weist die FB-Einheit 2 ein Sendeteil 4 und ein Empfangsteil 7 auf. In der FB-Einheit 2 ist eine Tastatur 12 vorhanden, die über Leitung L3 mit einer Steuerlogik 11, die als µP oder µC ausgeführt sein kann, verbunden ist. Werden mittels Tastatur 12 Befehle eingegeben, die den Betrieb des Gerätes 1 steuern, werden diese als Daten über Leitung L2 dem Sendeteil 4 zugeführt. Gleichzeitig wird über Leitung L7 von der Steuerlogik 11 ein Befehl ausgegeben, der das Empfangsteil 7 in der FB-Einheit 2 sperrt, um Fehleingaben durch die von dem Sendeteil 4 ausgestrahlten Datenbefehle zu vermeiden. Über Leitung L1 können zur Kontrolle die ausgestrahlten Befehle dem Anzeigefeld 3 zwecks Anzeige zugeführt werden.

Der z.B. über einen datenmodulierten IR-Strahl ausgegebene Befehl wird von dem im Gerät 1 befindlichen Empfangsteil 5 aufgenommen, demoduliert und als Datenstrom über Leitung L9 der Steuerlogik 13 (µP oder µC) zugeleitet. Von dieser gelangen die Befehle über die Leitungen L13 - LX in das Gerät zwecks Ausführung der Befehle in den dadurch angesprochenen, nicht dargestellten Schaltungsteilen. Außerdem können über Leitung L11 erforderliche Anzeigen im Anzeigefeld 14 sichtbar gemacht werden. Die Steuerlogik 13 ist derart ausgebildet, daß die Ausgabe von Daten, die zyklisch auf Leitung 10 an den Sendeteil 5 geleitet werden, mit zwischengeschalteten Pausen versehen sind.

Diese Pausen haben folgende Funktion:
Bei Aussenden von auf einem Träger aufmodulierten Daten über das Gerätesendeteil 6 ist das eigene Empfangsteil 5 durch die Steuerlogik 13 über Leitung L12 zur Vermeidung von Fehleinstellungen durch diese Daten gesperrt. Da aber ein von der FB-Einheit 2 abgegebener Befehl sofort ausgeführt werden soll, darf das Empfangsteil 5 nicht gesperrt sein, wenn ein Befehl eintrifft. Wird nun aber die Übertragung von Daten getaktet, d.h. mit Pausen versehen, ist jeweils während einer Pause des Empfangsteil 5 aktiviert. Trifft während der Aktivierungsphase ein Befehl ein, wird dieser in der Steuerlogik 13 verarbeitet. Zugleich wird für die Zeit ankommender Signale die Ausgabe gerätebezogener Daten via Leitung L10 an den Sendeteil 6 durch die Steuerlogik 13 gesperrt. Durch Wahl des Pausentaktes muß gewährleistet sein, daß ein vom Bedienenden in Tastatur 12 eingegebener Befehl mit Sicherheit in eine "Pause" des Gerätes fällt.

Die von Gerät 1 ausgesendeten Daten werden vom Empfangsteil 7 in der FB-Einheit 2 über Leitung L8 einer Decoderschaltung 8 zugeführt, in dieser demoduliert, und von dieser über Leitung L6 einem Speicher 9, sowie einem Uhrenbaustein 10, zwecks Triggerung auf die im Gerät 1 eingestellte Uhrzeit, zugeführt. Von Speicher 9 gelangen die aktuellen Betriebs- und Einstelldaten von Gerät 1 über Leitung L5 an die Steuerlogik 11, von der über Leitung L1 die Anzeigen an Anzeigefeld 3 gesteuert werden. Ebenfalls werden die Uhrzeitangaben von Uhrenbaustein 10 über Leitung L4 der Steuerlogik 11 zwecks Anzeige an Anzeigefeld 3 zugeführt.

## Patentansprüche

1. Fernbedienungssystem für elektrische und elektronische Geräte (1), insbesondere für Geräte der Unterhaltungselektronik, bei dem die Fernbedieneinheit (2) ein elektronisch steuerbares Anzeigefeld (3) sowie einen Befehlssender (4) und das Gerät (1) einen Befehlsempfänger (5) und zusätzlich das Gerät (1) einen Sender (6) und die Fernbedienungseinheit (2) einen diesem zugeordneten Empfänger (7) aufweist, wobei nach Erhalt eines von der Fernbedieneinheit (2) ausgesendeten Befehles im Gerät (1) Daten generiert werden, die entsprechend dem durch den Befehl bewirkten Status des Gerätes (1), Informationen über im Gerät (1) vorhandene aktuelle Betriebs-und/oder Einstellzustände enthalten, und wobei diese Daten von dem im Gerät (1) angeordneten Sender (6), dem in der Fernbedieneinheit (2) zugeordneten Empfänger (7) übermittelt, in der Fernbedieneinheit (2) aufbereitet und als Anzeige am Anzeigefeld (3) sichtbar gemacht werden, dadurch gekennzeichnet, daß bei Aktivieren eines der Sender (4, 6) der eigene Empfänger (7, 5) durch eine Steuerlogik (11, 13) für einen Empfang gesperrt ist und daß die die aktuelle Betriebs- und/oder Einstellzustände enthaltenden Daten vom Gerät (1) mit zwischengeschalteten Pausen übertragen werden, wobei in den Pausen der im Gerät (1) angeordnete Empfänger (5) empfangsbereit ist.

2. System nach Anspruch 1, dadurch gekennzeichnet, daß in der Fernbedieneinheit (2) ein Datenspeicher (9) für bereits empfangene Daten vorgesehen ist, die bei Abruf und/oder ständig am Anzeigefeld (3) sichtbar gemacht werden.

3. System nach Anspruch 1 oder 2, dadurch gekennzeichnet, daß in der Fernbedieneinheit (2) ein Uhrenbaustein (10) vorgesehen ist, der durch Zeitdaten vom Gerät (1) nach steuerbar ist.

4. System nach einem der vorhergehenden Ansprüche, dadurch gekennzeichnet, daß der Takt der zwischengeschalteten Pausen so gewählt ist, daß ein in eine Tastatur (12) der Fernbedieneinheit (2) eingegebener Befehl mit Sicherheit in eine Pause fällt.

## Claims

1. A remote control system for electrical and electronic devices (1), in particular for home entertainment electronic devices, wherein the remote control unit (2) comprises an electronically controllable display field (3) and a command transmitter (4) and the device (1) comprises a command receiver (5) , and additionally the device (1) comprises a transmitter (6) and the remote control unit (2) comprises a receiver (7) associated with said transmitter, wherein on the reception of a command transmitted from the remote control unit (2) in the device (1) data items are generated which, according to the status of the device (1) brought about by the command, contain information relating to current operating states and/or setting-up states prevailing in the device (1), and wherein these data items are conveyed from the transmitter (6) arranged in the device (1) to the associated receiver (7) in the remote control unit (2), are prepared in the remote control unit (2) and visualised in the form of a display on the display field (3), characterised in that on the activation of one of the transmitters (4, 6) the associated receiver (7, 5) is inhibited from receiving by a control logic circuit (11, 13) and that the data items containing the current operating states and/or setting-up states are transmitted from the device (1) with interposed pauses, where the receiver (5) arranged in the device (1) is ready to receive during the pauses.

2. A system as claimed in Claim 1, characterised in that in the remote control unit (2) a data store (9) is provided for already received data items which are visualised on the display field (3) when called up and/or continuously.

3. A system as claimed in Claim 1 or 2, characterised in that in the remote control unit (2) a clock module (10) is provided which can be adjusted by items of time data from the device (1).

4. A system as claimed in one of the preceding claims, characterised in that the timing of the interposed pauses is selected such that a command input into a keyboard (12) of the remote control unit (2) reliably falls in a pause.

## Revendications

1. Système de télécommande pour appareils électriques et électroniques (1), en particulier pour des appareils électroniques de loisirs, dans lequel l'unité de télécommande (2) présente une zone de visualisation (3) pouvant être commandée électroniquement ainsi qu'un émetteur d'ordres (4) et dans lequel l'appareil (1) présente un récepteur d'ordres (5) et dans lequel l'appareil (1) présente en plus un émetteur (6) et l'unité de télécommande (2) un récepteur (7) qui est affecté à celui-ci, des données étant générées dans l'appareil (1) après réception d'un ordre émis par l'unité de télécommande (2), données qui contiennent, selon l'état de l'appareil (1) provoqué par l'ordre, des informations sur les états de fonctionnement et/ou de réglage actuels existants dans l'appareil (1), ces données étant transmises par l'émetteur (6) placé dans l'appareil (1) au récepteur (7) affecté dans l'unité de télécommande (2), étant traitées dans l'unité de télécommande (2) et étant rendues visibles comme affichage sur la zone de visualisation (3), **caractérisé en ce** que, lors de l'activation de l'un des émetteurs (4, 6), le récepteur propre (7, 5) est bloqué pour la réception par une logique de commande (11, 13) et que les données qui contiennent les états actuels de fonctionnement et/ou de réglage sont transmises par l'appareil (1) avec des pauses intercalées, le récepteur (5) placé dans l'appareil (1) étant prêt à la réception pendant les pauses.

2. Système selon la revendication 1, **caractérisé en ce** qu'une mémoire de données (9) est prévue dans l'unité de télécommande (2) pour des données déjà reçues qui sont rendues visibles sur la zone de visualisation (3) à la demande et/ou constamment.

3. Système selon la revendication 1 ou 2, **caractérisé en ce** qu'un composant d'horloge (10) (2), qui peut être poursuivi par les données de temps de l'appareil (1), est prévu dans l'unité de télécommande.

4. Système selon l'une des revendications précédentes, **caractérisé en ce** que le rythme des pauses intercalées est choisi tel qu'un ordre introduit dans un clavier (12) de l'unité de télécommande (2) tombe de manière sûre dans une pause.
